Europäisches Patentamt

**European Patent Office**

**Office européen des brevets**

(19)

(11) Publication number: **0 144 389**
**B1**

# EUROPEAN PATENT SPECIFICATION

(45) Date of publication of patent specification: **27.07.88**   (51) Int. Cl.⁴: **A 01 J 7/00**

(21) Application number: **84902229.8**

(22) Date of filing: **18.05.84**

(88) International application number:
**PCT/SE84/00189**

(87) International publication number:
**WO 84/04654 06.12.84 Gazette 84/28**

(54) **APPARATUS IN A PIPELINE MILKING PLANT.**

| | |
|---|---|
| (30) Priority: **30.05.83 SE 8303035** | (73) Proprietor: **ALFA-LAVAL AGRI INTERNATIONAL AB**<br>**Farm Center P.O. Box 39**<br>**S-147 00 Tumba (SE)** |
| (43) Date of publication of application:<br>**19.06.85 Bulletin 85/25** | |
| (45) Publication of the grant of the patent:<br>**27.07.88 Bulletin 88/30** | (72) Inventor: **MÄEHANS, Väino**<br>**Hedvägen 12**<br>**S-151 52 Södertälje (SE)** |
| (84) Designated Contracting States:<br>**DE FR GB NL SE** | (74) Representative: **Lerwill, John et al**<br>**A.A. Thornton & Co. Northumberland House**<br>**303-306 High Holborn**<br>**London, WC1V 7LE (GB)** |
| (56) References cited:<br>**SE-B- 334 771**<br>**US-A-2 213 069**<br>**US-A-2 987 065**<br>**US-A-3 618 621**<br>**US-A-4 168 677** | |

## Description

This invention relates to an apparatus for a pipeline milking plant.

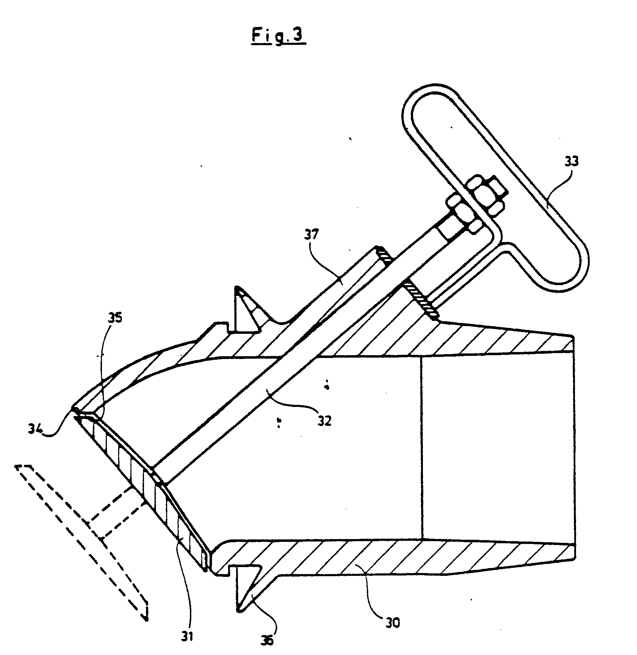

A known milking apparatus (Statens Maskinprovningar, Upsala, Publication 2534, page 8, fig. 3) comprises a pipeline which extends around the milking shed and has its ends connected at respective positions to a receptacle in which air is separated from milk. The pipeline has connection points therealong for connection of milking units which, during the milking operations convey milk from the animals to the pipeline. A branch pipe is connected to the pipeline by a valve and includes connection points at which the milking units can be connected for introducing a cleaning medium into the pipeline in the vicinity of the receptacle during cleaning operations.

In the known plants problems have arisen when cleaning the milking system, because the valve has to be readjusted during the cleaning operation in order to ensure that the whole system is properly cleaned. Often the person controlling the cleaning operation is carrying out other duties at the same time as the cleaning goes on, and as a result the valve is not readjusted. As a consequence the short length of pipeline between the valve and the receptacle is not cleaned properly, which can lead to contaminated milk.

The present invention aims to solve the above-mentioned problem by allowing cleaning of the whole pipeline at the same time.

According to the invention there is provided an apparatus for a pipeline milking plant, comprising a pipeline having the ends thereof connected at respective positions to a receptacle for separation of air from milk, the pipeline having connection points therealong for connection of milking units for conducting milk from animals to the pipeline, and the pipeline having at least one further connection adjacent the receptacle and through which a cleaning medium can be introduced into the pipeline during cleaning operations, characterised in that the end of the pipeline adjacent the cleaning connection opens into the receptacle through a valve arranged to be open during milking and to be closed during cleaning of the apparatus. In the closed condition the valve may be completely closed or it may define a restricted opening for cleaning medium to flow through the valve and into the receptacle.

A better understanding of the invention will be had from the following detailed description, given with reference to the accompanying drawings, in which:—

Figure 1 is a schematic diagram of a known pipeline milking plant;

Figure 2 is a schematic diagram of a plant incorporating an apparatus according to the invention; and

Figure 3 is an axial section through a preferred valve for the apparatus of the invention.

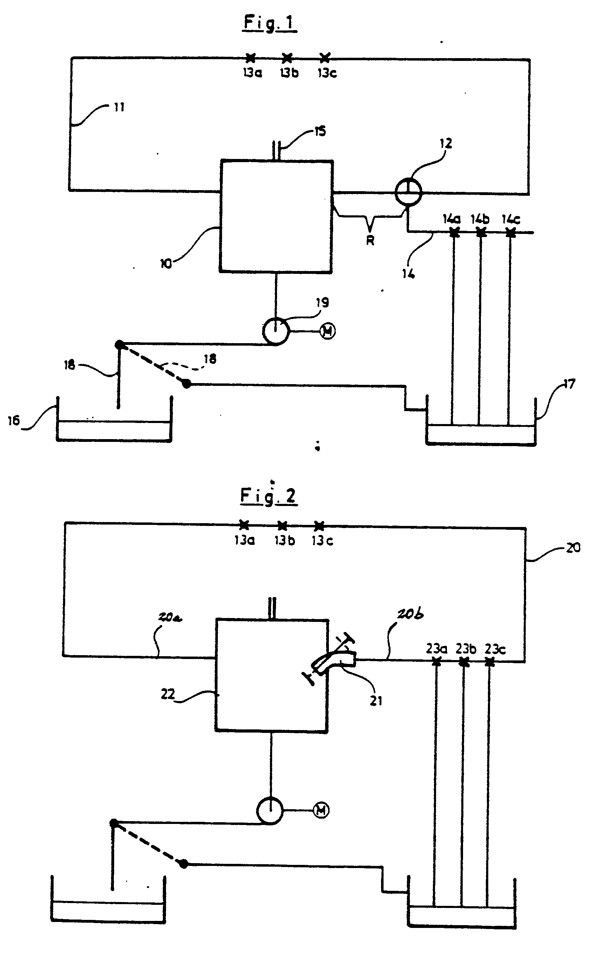

The apparatus shown in Figure 1 includes an air separator 10 which forms part of a milking system and is connected to a milk line. The milk line comprises a pipeline 11 which extends around the milking shed. The pipeline 11 is connected to the air separator at two different positions. Included in the system is a three way valve 12 which is adjusted to one position during milking and to another position during cleaning of the system.

Crosses 13a, b, c indicate positions where milking units are connected to outlet ports in the pipeline 11 during milking. When cleaning the system, the milking units are disconnected from the pipeline 11 and are connected to a pipe 14 which, as a rule, is positioned in the cleaning room and branches from the pipeline 11 at the valve 12. In Figure 1 the connection of the milking units to the pipe 14 has been indicated by the outlets 14a, b, c.

The air separator 10 is connected to a vacuum line 15, a milk tank 16 and a cleaning trough 17. Moreover, in the system there is a tube 18, which can be connected either with the milk tank 16 or with the cleaning trough 17, and a pump 19 driven by a motor M for pumping a cleaning fluid or milk through a pipeline connecting the air separator 10 with the tube 18.

When milking, the milking units are connected to the pipeline 11 at the positions 13a, b, c. Vacuum prevails in the pipeline 11, since the air separator is under vacuum, and the milk coming from the cows is sucked through the pipeline 11 and into the air separator 10, where air mixed with the milk is sucked away through the line 15, while the milk is pumped to the milk tank 16.

When cleaning, the valve 12 is readjusted to communicate the pipe 14 which the pipeline 11 and the tube 18 is switched over so that the air separator 10 is connected to the cleaning trough 17. Moreover, the milking units are moved from the positions 13a, b, c to the cleaning room and are connected to the pipe 14 at the positions 14a, b, c. The milking units also have a connection with the cleaning trough 17 so that the cleaning fluid is sucked through these units and via the three way valve 12 into the pipeline 11, through the air separaor and back to the trough 17 via the pump 19.

In order that the pipe length R between the valve 12 and the air separator 10 shall also be cleaned, the valve 12 has to be readjusted once more so that a direct connection between the pipe 14 and the air separator 10 is created. This cleaning procedure has to be repeated for the steps of rinsing, cleaning, rinsing and disinfecting. Because the whole procedure takes so long, the pipe length R tends not to get cleaned.

In Figure 2 is shown an apparatus including a novel valve arrangement which makes it possible to clean the whole pipeline 20 after the valve 21 has been readjusted from a milking position to a cleaning position.

In Figure 2 a pipeline 20 is provided with two branches 20a, b having their ends connected to opposite sides of a receptacle 22, which functions as a separator for separating air from the milk that enters the receptacle 22. The branch 20a of the pipeline 20 communicates with the air separator 22 through a constantly open port, while the end of the other branch 20b of the pipeline 20 is connected to the receptacle 22 by a valve 21 mounted in the wall of the air separator 22.

A series of outlets 13a, b, c are provided in the pipeline 20 in conventional way for connection of the milking units during milking operations. A second series of outlets 23a, b, c is also provided for connection of means, which suitably comprises the milking units, for conveying a cleaning medium to the pipeline 20 during cleaning operations. These outlets 23a, b, c are preferably arranged in the pipeline 20 in that branch 20b that is connected to the valve 21, and in the vicinity of the air separator 22.

The valve 21 is shown in detail in Figure 3 and comprises a valve housing in the form of a tubular pipe part 30 and a co-operating valve member or cone 31. The valve cone 31 is adjustable by a handle 33 connected to the valve cone by a stem 32 so that the valve cone can take either of two positions, namely an open position (indicated by broken lines in Figures 2, 3) for milking or a closed position for cleaning. The stem 32 extends slidably and rotatably through a thickened wall portion or superstructure 37 of the pipe part 30. The valve cone 31 is circular and has a conical surface 34 which co-operates with a conical valve seat 35 defined by a surface at one end of the pipe part 30. The pipe part 30 can be rotatable relative to the wall of the air separator 22 and seals against the wall by means of a sealing lip 36 formed as an integral part of the pipe part 30 and extending round the pipe part 30. By turning the valve 21, during cleaning, the cleaning fluid passing through the valve can be directed upwards so that also the upper part of the air separator 10 is cleansed.

An important advantage of the design of the valve is that the valve is easy to clean.

In Figure 3 the valve cone 31 is shown locked in closed position by means of the handle 33, being in abutting engagement with the superstructure 37.

The valve is in its "closed" position, but the valve cone 31 is not tight against the valve seat 34. Instead a small gap is defined between them so that the vacuum in the air separator 22 is propagated through this gap into the pipe part 30, whereby during cleaning, some of the cleaning fluid entering the pipeline at the positions 23a, b, c will be sucked through the valve and into the air separator. Therefore, the inner part of the pipe part 30 and the valve cone 31 are also cleaned. Most of the cleaning fluid, however, is sucked from the positions 23a, b, c in the other direction through the pipeline 20, since the strongest vacuum is transmitted from the air separator 22 through the open mouth of the branch 20a and further through the pipeline 20 to the outlets 23a, b, c. Thus, the whole pipeline 20 is cleaned.

The reason for the valve taking a closed position during cleaning is to ensure that the main part of the cleaning medium flows through the pipeline and into the air separator via the branch 20a. If the valve should be open during cleaning, the cleaning medium would be sucked into the air separator by the shorter route through the branch 20b, and the main part of the pipeline would not be cleaned.

According to another embodiment the valve is arranged to completely close in its "closed" position, whereby no cleaning fluid flows through the valve. Even in this case, however, the interior of the pipe part 30 and the pipe length between the pipe part 30 and the outlets 23a, b, c will be cleaned since, when introducing a cleaning fluid into the pipeline 20 at the outlets 23a, b, c which are relatively close to the receptacle 22, part of the cleaning fluid will flow towards the valve 21 and clean the walls of the valve and the length of pipe between the valve 21 and the outlets 23a, b, c.

According to a further embodiment there may be at least one small opening in the pipe wall of the valve, through which restricted opening the cleaning medium can flow when the valve is closed.

With the described apparatus embodying the invention it is possible to clean the whole pipeline connected to the air separator in one single cleaning operation.

The invention is, of course, not limited to the embodiments specifically described. Thus, a cleansing fluid can be introduced into the pipeline 20 in other ways than that one disclosed, for instance by arranging a separate pipe in the same way as is shown in Figure 1, to which the means for introducing the cleaning fluid into the pipeline is connected.

This separate pipe could be connected to the pipeline 20 in the vicinity of the valve 21 via an open T-connection. This modification of the apparatus according to Figure 2 may be appropriate from considerations of space or other considerations.

**Claims**

1. An apparatus for a pipeline milking plant, comprising a pipeline (20) having the ends thereof connected at respective positions to a receptacle (22) for separation of air from milk, the pipeline having connection points (13a, 13b, 13c) therealong for connection of milking units for conducting milk from animals to the pipeline, and the pipeline having at least one further connection (23a, 23b, 23c) adjacent the receptacle and through which a cleaning medium can be introduced into the pipeline during cleaning operations, characterised in that the end of the pipeline (21) adjacent the cleaning connection (23a, 23b, 23c) opens into the receptacle (22) through a valve (21) arranged to be open during milking and to be closed or at least to substantially restrict flow during the cleaning of the apparatus.

2. An apparatus according to claim 1, wherein the valve (21) is mounted in the wall of the receptacle (22).

3. An apparatus according to claim 1 or 2, wherein the valve (21) comprises a tubular valve housing (30) and a valve member (31).

4. An apparatus according to claim 3, wherein the valve member (31) is connected to an operating handle (33) by a stem (32), and the valve is adjustable either to be open for milking or to be closed or flow restrictive for cleaning.

5. An apparatus according to claim 4, wherein the stem (32) extends rotatably through an enlarged portion (37) of the valve housing.

6. An apparatus according to any one of claims 3 to 5, wherein the valve (21) is adjustable to a completely closed position.

7. An apparatus according to any one of claims 3 to 5, wherein the valve member (31) is circular and has a frusto-conical surface (34) for co-operating with a frusto-conical surface (35) at an end of the valve housing (30), a narrow gap being formed between the frusto-conical surfaces when the valve is arranged to restrict flow.

8. An apparatus according to any one of claims 3 to 7, wherein the valve (21) is rotatable relative to the wall of the receptacle (22) and has a sealing lip (36) integral with the valve housing (30) and extending therearound.

9. An apparatus according to any one of the preceding claims, wherein said at least one further connection comprises a series of outlets (23a, b, c) in the pipeline (20).

10. An apparatus according to claim 9, wherein the pipeline (20) comprises two branches (20a, b) opening into opposite sides of the receptacle (22), and said outlets (23a, b, c) are in the branch (20b) connected to the valve (21) and are positioned close to the valve.

11. An apparatus according to claim 3, wherein the valve member (31) co-operates with a valve seat (35) defined at an end of the valve housing positioned within the receptacle.

12. An apparatus according to any one of claims 1 to 6 or 11, wherein the valve (21) in said closed position defines a restricted opening communicating said one end of the pipeline with the interior of the receptacle.

## Patentansprüche

1. Vorrichtung für eine Rohrmelkanlage, bei der eine Rohrleitung (20) mit ihren Enden an entsprechenden Stellen an einen Behälter (22) zum Trennen der Luft on der Milch angeschlossen ist und entlang der Rohrleitung Anschlußstellen (13a, b, c) zum Anschließen der Melkeinheiten vorgesehen sind, um die Milch von den Tieren zur Leitung zu fördern, wobei die Rohrleitung mindestens einen weiteren Anschluß (23a, b, c) nahe dem Behälter aufweist, durch den während des Reinigens ein Reinigungsmittel in die Rohrleitung eingespeist werden kann, dadurch gekennzeichnet, daß das dem Reinigungsanschluß (23a, b, c) naheliegende Ende der Rohrleitung (20) in den Behälter (22) über ein Ventil (21) Mündet, daß beim Melken geöffnet und beim Reinigen geschlossen ist bzw. die Strömung mindestens erheblich drosselt.

2. Vorrichtung nach Anspruch 1, bei der das Ventil (21) in die Wandung des Behälters (22) eingesetzt ist.

3. Vorrichtung nach Anspruch 1 oder 2, bei der das Ventil (21) ein rohrförmiges Ventilgehäuse (30) und ein Ventilelement (31) aufweist.

4. Vorrichtung nach Anspruch 3, bei der das Ventilelementen (31) über einen Schaft (32) mit einem Betätigungsgriff (33) verbunden ist und das Ventil zum Melken in die Offenstellung und zum Reinigen in die Schließ- bzw. eine Drosselstellung bringbar ist.

5. Vorrichtung nach Anspruch 4, bei der der Schaft (32) drehbar durch einen erweiterten Teil (37) des Ventilgehäuses verläuft.

6. Vorrichtung nach Ansprüche 3 bis 5, bei der das Ventil (21) in eine vollständig geschlossene Stellung bringbar ist.

7. Vorrichtung nach Ansprüche 3 bis 5, bei der das Ventilelement (31) kreisförmig ist und eine kegelstumpfförmige Fläche (34) hat, die mit einer kegelstumpfförmigen Fläche (35) an einem Ende des Ventilgehäuses (30) zusammen wirkt, wobei in der Drosselstellung des Ventils ein schmaler Spalt zwischen den kegelstompfförmigen Flächen verbleibt.

8. Vorrichtung nach Ansprüche 3 bis 7, bei der das Ventil (21) relativ zur Wandung des Behälters (23) drehbar ist und eine Dichtlippe (36) aufweist, die einteilig mit dem Ventilgehäuse (30) ist und um es herumverläuft.

9. Vorrichtung nach einem der vorgehenden Ansprüche, bei der es sich bei dem mindestens einen weiteren Anschluß um eine Reihe von Auslässen (23a, b, c) in der Rohrleitung (20) handelt.

10. Vorrichtung nach Anspruch 9, bei der die Rohrleitung zwei Zweige (20a, b) hat, die auf gegenüberliegenden Seiten im Behälter (22) münden, und die Auslässe (23a, b, c) sich im an das Ventil (21) angeschlossenen Zweig (20b) und nahe am Ventil (21) befinden.

11. Vorrichtung nach Anspruch 3, bei der das Ventilelement (31) mit einem Ventilsitz (35) zusammenwirkt, der an einem innerhalb des Behälters befindlichen Ende des Ventilgehäuses ausgebildet ist.

12. Vorrichtung nach einem der Ansprüche 1 bis 6 oder 11, bei der das Ventil (21) in der Schließstellung eine Drosselstelle bildet, über die das eine Ende der Rohrleitung mit dem Behälterinneren in Verbindung steht.

## Revendications

1. Appareil pour une installation de traite à conduite, comprenant une conduite (20) dont les extrémités sont reliées en des positions respectives à un réceptacle (22) pour la séparation de l'air du lait, la conduite comprenant sur sa longueur des points de connexion (13a, 13b, 13c) en vue de la connexion d'unités de traite pour acheminer le lait entre les animaux et la conduite, et la conduite comprenant au moins une connexion supplémentaire (23a, 23b, 23c) adjacente au réceptacle et par laquelle un agent de nottoyage peut être introduit dans la conduite pendant les opérations de nettoyage, caractérisé en ce que l'extrémité de la conduite (21) qui est adjacente à la connexion de nettoyage (23a, 23b, 23c) débouche dans la réceptacle (22) par une vanne (21) aménagée pour être ouverte pendant la traite et pour être fermée, ou du moins pour limiter sensiblement l'écoulement, pendant le nottoyage de l'appareil.

2. Appareil selon la revendication 1, dans lequel la vanne (21) est montée dans le paroi du réceptacle (22).

3. Appareil selon la revendication 1 ou 2, dans lequel la vanne (21) comprend un logement de vanne tubulaire (30) et un organe de vanne (31).

4. Appareil selon la revendication 3, dans lequel l'organe de vanne (31) est relié à une poignée de manoeuvre (33) par une tige (32), et la vanne peut être réglée soit pour être ouverte en vue de la traite, soit fermée pour ne permettre qu'un écoulement limité en vue du nettoyage.

5. Appareil selon la revendication 4, dans lequel la tige (32) s'étend de façon rotative à travers une partie élargie (37) du logement de la vanne.

6. Appareil selon l'une quelconque des revendications 3 à 5, dans lequel la vanne (21) est réglable jusqu'à une position complètement fermée.

7. Appareil selon l'une quelconque des revendications 3 à 5, dans lequel l'organe de vanne (31) est circulaire et présente une surface tronconique (34) pour coopérer avec une surface tronconique (35) à une extrémité du logement de vanne (30), un étroit interstice étant formé entre les surfaces tronconiques quand la vanne est prévue pour limiter l'écoulement.

8. Appareil selon l'une quelconque des revendications 3 à 7, dans lequel la vanne (21) peut tourner par rapport à la paroi du réceptacle (22) et comprend une lèvre d'étanchéité (36) d'un seul tenant avec le logement de vanne (30) et s'étendant autour.

9. Appareil selon l'une quelconque des revendications précédentes, dans lequel au moins une connexion supplémentaire comprend une série de sorties (23a, b, c) dans la conduite (20).

10. Appareil selon la revendication 9, dans lequel la conduite (20) comprend deux branches (20a, b) débouchant dans les côtés opposée du réceptacle (22), et les dites sorties (23a, b, c) sont dans la branche (20b) reliée à la vanne (21) et sont disposées à proximité de la vanne.

11. Appareil selon la revendication 3, dans lequel l'organe de vanne (31) coopère avec un siège de vanne (35) défini à une extrémité du logement de vanne disposé à l'intérieur du réceptacle.

12. Appareil selon l'une quelconque des revendications 1 à 6 ou 11, dans lequel la vanne (21), quand elle est dans ladite position fermée, définit une ouverture limitée qui fait communiquer ladite extrémité de la conduite avec l'intérieur du réceptacle.

Fig.1

Fig.2

## Fig.3